# EUROPEAN PATENT APPLICATION

(11) **EP 4 813 802 A1**
(43) Date of publication of application: **30.09.2026**
(21) Application number: 25167111.1
(22) Date of filing: 28.03.2025
(51) Int. Cl.: B62D 1/19

(54) **STEERING COLUMN FOR A VEHICLE**

(71) Applicant: Volvo Car Corporation, 405 31 Göteborg (SE)
(72) Inventor: LEONG, Kevin, 40531 Göteborg (SE); ANDERSSON, Wilma, 40531 Göteborg (SE); SVENSSON, Johan, 40531 Göteborg (SE)
(74) Representative: Kransell & Wennborg KB

(57) **Abstract**

The disclosure relates to a steering column (1) for a vehicle, the steering column (1) comprising: a first column segment (10) for attachment to the vehicle; a second column segment (20) for attaching a steering device (2) thereto, wherein the second column segment (20) is movable in relation to the first column segment (10) and collapsible towards the first column segment (10) in a crash event; a wire (30) attached to the second column segment (20); and a brake device (40), wherein the brake device (40) comprises a braking mechanism (41, 47), wherein the wire (30) is spooled inside the brake device (40) and coupled to the braking mechanism (41, 47), and wherein the braking mechanism (41, 47) is configured to brake when the wire (30) is unspooled by the collapsing of the second column segment (20) in the crash event, thereby restraining the wire (30) from unspooling and restraining the collapsing of the second column segment (20).

## Description

### TECHNICAL FIELD

The present disclosure relates to a steering column for a vehicle, a vehicle comprising the steering column, and the use of the steering column in a vehicle.

### BACKGROUND

The steering column in vehicles may be part of the restraint system. Specifically, the steering column may be configured as a so-called collapsible steering column. The collapsible steering column can, during a crash scenario, collapse or, in other words, ride down. During this collapsing action, the steering column may absorb energy from the crash, thereby acting as a restraint system for an occupant or driver of the vehicle.

Current designs of collapsible steering columns are either fixed in their energy absorption or have two different levels or stages of energy absorption. Hence, current designs are rather inflexible in terms of the actual load input into the steering column during the crash.

Moreover, even in collapsible steering columns with two different levels of energy absorption, typically different mechanisms of energy absorption are used, which makes it rather cumbersome to adapt the design of the collapsible steering columns to different markets or vehicles.

### SUMMARY

The problem is at least partially solved or alleviated by the subject matter of the independent claims of the present disclosure, wherein further examples are incorporated in the dependent claims.

According to a first aspect, there is provided a steering column for a vehicle. The steering column comprises a first column segment for attachment to the vehicle and a second column segment for attaching a steering device thereto, wherein the second column segment is movable in relation to the first column segment and collapsible towards the first column segment in a crash event. The steering column further comprises a wire attached to the second column segment. And the steering column further comprises a brake device, wherein the brake device comprises a braking mechanism, wherein the wire is spooled inside the brake device and coupled to the braking mechanism, and wherein the braking mechanism is configured to brake when the wire is unspooled by the collapsing of the second column segment in the crash event, thereby restraining the wire from unspooling and restraining the collapsing of the second column segment.

By means of the brake device with the braking mechanism, the steering column utilizes a variable energy absorption mechanism depending on the load or force applied onto the steering column during the crash event. Specifically, the steering column will utilize the movement of the ride down or collapsing of the second column segment towards the first column segment, thereby triggering the brake device. The proposed steering column may also be referred to as a collapsible steering column. The brake device during the collapsing can have a variable brake-effect for the energy absorption depending on the load applied on the steering column during the crash event. Specifically, the wire will be stopped from unspooling and thereby restrain the second column segment from any further collapsing depending on the load from the crash event and thus the collapsing of the second column segment, which can pull the wire and thereby unspool it. Specifically, the brake will restrain the wire at some point after unspooling depending on the load, thereby stopping any further collapsing.

Advantageously, the proposed brake device provides for a variable energy absorption mechanism, which has continuous or variable levels of energy absorption rather than specific levels or stages of energy absorption, which can be provided by different mechanisms such as a pyrotechnic actuator and a structural weakness, both of which provide one of the levels or stages of energy absorption, for example. Thereby, the proposed steering column may be used in different markets and for different vehicles without or only with minimal design adaptation. For example, depending on whether the market in which the vehicle is sold requires wearing a seat belt or not, the energy absorption provided by the steering column as restraint system may be easily adapted by changing the required load for the brake device to restrain the wire from unspooling and thereby define the total length that the steering column may collapse and thus how much energy it may absorb.

According to an example, the braking mechanism may comprise a friction braking mechanism. As a friction braking mechanism, the wire spooled inside the brake device may be restrained or stopped from further unspooling by one or more friction forces. The wire may generally be constructed from any sufficiently strong material and/or in any sufficiently strong design to prevent tearing of the wire during the restraining of the collapsing of the second column segment. For example, the wire may be a high tensile steel wire, a stainless-steel wire, a titanium wire, carbon fiber-reinforced polymer wire, glass fiber-reinforced polymer wire, or generally polymer wires.

According to an example, the friction braking mechanism may comprise a drum and at least one brake pad. The wire may be at least partially spooled in between the drum and the at least one brake pad. Specifically, the drum may be surrounding the wire, which may be spooled around the at least one brake pad or two or more brake pads. Thereby, the wire is located in between the brake pad or brake pads and the drum. When the brake pads are activated, e.g. by a centrifugal force applied during the crash event on the brake pads, they will press the wire against the drum, thereby restraining the wire from unspooling and restraining the collapsing of the second column segment.

According to an example, the at least one brake pad may be arranged on one or more axes rotatable relative to the drum. Also, the at least one brake pad may be movable along the one or more axes towards the drum such that the unspooling of the wire triggers the braking of the brake device by rotating the one or more axes and moving the at least one brake pad towards the drum, generating friction and thereby clamping the wire in between the at least one brake pad and the drum. Accordingly, the unspooling of the wire depending on the load of the crash applied onto the second column segment, e.g. by the occupant or driver colliding with the second column segment or the steering device attached thereto, may be inducing a centrifugal force on the one or more brake pads thereby moving towards the drum along the one or more axes and thereby clamping in between the drum and the one or more brakes the wire, which is thereby stopped from unspooling, effectively restraining the collapsing of the second column segment by the brake device, where the wire is tensioned between the clamping point and the attachment point to the second column segment.

According to an example, alternatively or additionally to a friction braking mechanism, the braking mechanism may comprise a magnetic braking mechanism. As a magnetic braking mechanism, the wire spooled inside the brake device may be restrained or stopped from further unspooling by one or more magnetic forces.

According to an example, the magnetic braking mechanism may comprise one or more conductive rotary components and one or more stationary magnets opposite of the one or more conductive rotary components. The one or more conductive rotary components may be attached to the wire such that the unspooling of the wire triggers the braking of the brake device by rotating the one or more conductive rotary components, thereby inducing eddy currents therein and generating opposing magnetic fields inside the brake device, which are restraining the wire from unspooling. Accordingly, by the generation of opposing magnetic fields at the one or more conductive rotary components and the one or more stationary magnets, the wire is stopped from unspooling or tensioned in between the attachment point to the second column segment and the attachment to the one or more conductive rotary components, and the second column segment cannot collapse any further.

According to an example, the wire may be guided through an aperture inside the first column segment. Thereby, the wire may be easily attached to an end of the second column segment, specifically an end located inside the first column segment, and can freely be unspooled.

According to an example, the wire may be attached to a second end of the second column segment opposite of a first end for attaching the steering device thereto. The steering device may for example be a steering wheel or a yoke-shaped steering device and be attached to the first end. The second end opposite thereof may be located inside the first column segment. The ends may in particular be longitudinal ends of a longitudinal or lengthy first column segment. Similarly, the second column segment may be a longitudinal or lengthy second column segment. Lengthy or longitudinal means that the largest extension is along the length or in the longitudinal direction of the respective segment or part.

According to an example, the second column segment may be slidable within the first column segment. Alternatively, the first column segment could be slidable within the second column segment. In any case, one of the column segments, in particular the second column segment, may be guided longitudinally and/or in position inside the other column segment, in particular the first segment. For example, the column segments may be configured as respective telescopes, where the first column segment is a first telescope arranged and guided inside the second column segment as second telescope. For example, the column segments may have a substantially cylindrical form factor or shape.

According to an example, the brake device may comprise a spring-loaded retraction mechanism for retracting the wire. The spring-loaded retraction mechanism may be comprising one or more springs, which can be loaded such that they retract an unspooled wire, e.g. after a crash event or after automatically or manually adjusting the position of the steering device inside the vehicle cabin by moving the second column segment towards the first column segment, in case such adjustment configuration is provided, to ensure that the wire is tensioned to optimally function in a consequent crash event.

According to an example, the brake device may be attached to the first column segment. For example, the brake device may be attached to an outer perimeter or surface of the first column segment. The outer perimeter or surface may be opposite of an inner perimeter or surface, in which the second column segment may be located at least partially. Alternatively, the brake device may be located or attached away from the second column segment and the first column segment. In particular, the brake device may be attachable or attached to a cockpit of the vehicle. Thereby, the position of the brake device is fixed with respect to the moveable second steering column.

According to an example, the steering column may comprise a release arrangement in between the first column segment and the second column segment. The release arrangement may be configured to release the second column segment for collapsing towards the first column segment in the crash event. For example, the release arrangement may comprise a mechanical release mechanism with one or more components deformable in the crash event, a pyrotechnic release mechanism with one or more pyrotechnic actuators, and/or a pneumatic release mechanism with one or more compressors. Thereby, the second column segment may be released for collapsing or riding down the first column segment based on a mechanic, pyrotechnic and/or a pneumatic principle. For example, in case of a mechanical release mechanism, there may be one or more deformable or breakable components, e.g. an intended breaking point, in between the two column segments, which when receiving a load from the crash event, e.g. when the occupant or driver contacts the steering device, deform or break, thereby enabling the collapsing of the second steering column. A pyrotechnic actuator and/or a pneumatic actuator can similarly be triggered based on a load from the crash event or generally based on an electronic crash signal, that is transmitted to any one of the pyrotechnic actuator or compressor for releasing the second column segment.

According to an example, the steering column may comprise a spool gear with two spools of different diameter onto which the wire may be spooled between its attachment to the braking mechanism and to the second column segment. The smaller diameter spool may be located or arranged at the braking mechanism. Specifically, the wire may be connected from the braking mechanism to the smaller diameter spool. And, the wire may be spooled from the smaller diameter spool around the larger diameter spool, from where it is connected to the second column segment. Thereby, the rotational speed of the unspooling of the wire at the braking mechanism, e.g. at the one or more brake pads or the one or more conductive rotary components, can be increased. Thereby, even when the second steering column segment moves relatively slow, sufficient rotational speed for the braking mechanism to trigger can be provided by the unspooling of the wire via the spool gear.

According to a second aspect, there is provided a vehicle comprising the steering column according to the first aspect and the steering device attached to the second column segment.

According to a third aspect, there is provided a use of the steering column of the first aspect in a vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a collapsible steering column in a normal operating position;
- Figure 2: shows a perspective view on the collapsible steering column in a collapsed position or condition after a crash event;
- Figure 3: shows a cross-sectional view of the collapsible steering column;
- Figure 4: shows a cross-sectional view inside a break device of the collapsible steering column;
- Figure 5: shows a schematic illustration of the functioning principle of the break device of Fig. 4 during a crash event;
- Figure 6: shows a schematic illustration of the break device with a spool gear; and
- Figure 7: shows a cross-sectional view inside an alternative break device of the collapsible steering column.

### DETAILED DESCRIPTION

The Figures are merely schematic representations and serve only to illustrate examples of the disclosure. Identical or equivalent elements are in principle provided with the same reference signs.

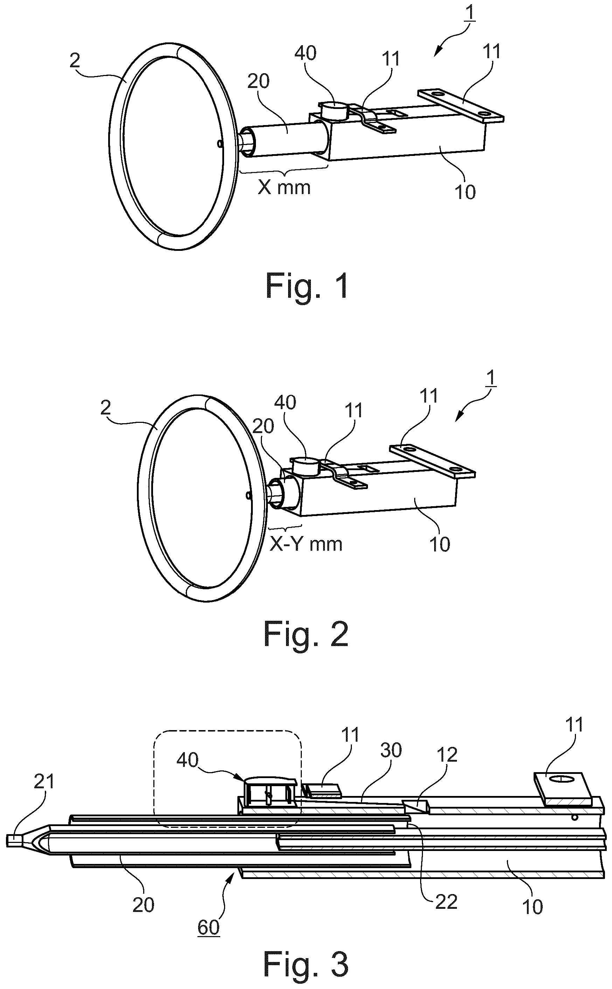

Figure 1 shows a steering column 1 for a vehicle. The steering column 1 comprises a first column segment 10, which comprises attachment sections 11 for attachment to or inside a vehicle, e.g. at or to a cockpit of the vehicle. Further, the steering column 1 comprises a second column segment 20, to which a steering device 2 in the form of a steering wheel is attached. The second column segment 20 is moveable in relation to the first column segment 10, in particular inside the first column segment 10 and thereby relative to the first column segment 10, which may be fixed with respect to the vehicle, in particular to the cockpit of the vehicle. Accordingly, the second column segment 20 can be moveable with its thereto attached steering device 2 closer towards the cockpit.

Specifically, in this example, as seen in Figure 3, the second column segment 20 is slidable inside the first column segment 10. For this purpose, the outer diameter of the second column segment 20 may be smaller than the outer diameter of the first column segment 10. The outer diameter of the second column segment 20 may in particular correspond to the inner diameter of the first column segment 10 to be slidably received therein, specifically in a cavity or space inside the first column segment 10 having the inner diameter. Further, in this example, the slidable engagement is provided by a rail shaped structure inside the first column segment 10, which may be part of the first column segment 10, and on which the second column segment 20 may slidingly engage with a shape corresponding to the shape of the rail shaped structure.

For example, such sliding functionality may be useful to provide for positional adjustment of the steering device 2 inside the cabin of the vehicle. For example, there may be a mechanism e.g. provided by a handle or similar, by which an occupant or driver of the vehicle may release a fixation of the second column segment 20 to the first column segment 10 and slide the second column segment 20 further towards the cockpit or away from it to adjust the position of the steering device 2.

However, the sliding functionality alternatively or additionally may have another purpose, specifically a safety purpose. Specifically, it may be desirable that the steering column may collapse with its second column segment towards the cockpit. For this purpose, the second column segment may be released from a fixed position relative to the first column segment and slide or ride down the first column segment and thereby collapse, reducing the distance between the steering device and the driver or occupant sitting inside the vehicle and opposite of the steering device. Through the collapsible steering column, energy from a collision of the driver or occupant with the steering device or an airbag of the steering device, which may have been triggered and inflated in the meantime, can be absorbed.

Figure 1 shows the collapsible steering column 1 during the normal operating position or driving position for driving the vehicle. Figure 2 on the other hand shows the collapsed steering column 1 after the crash event. As can be seen by the difference in length of the visible second column segment 20 extending out of the first column segment 10, the second column segment 20 extends out of the first column segment 10 by X mm in Figure 1 and has slide by Y mm into the first column segment 10, reducing the length of the second column segment 20 extending or sticking out of the first column segment 10 to X - Y mm.

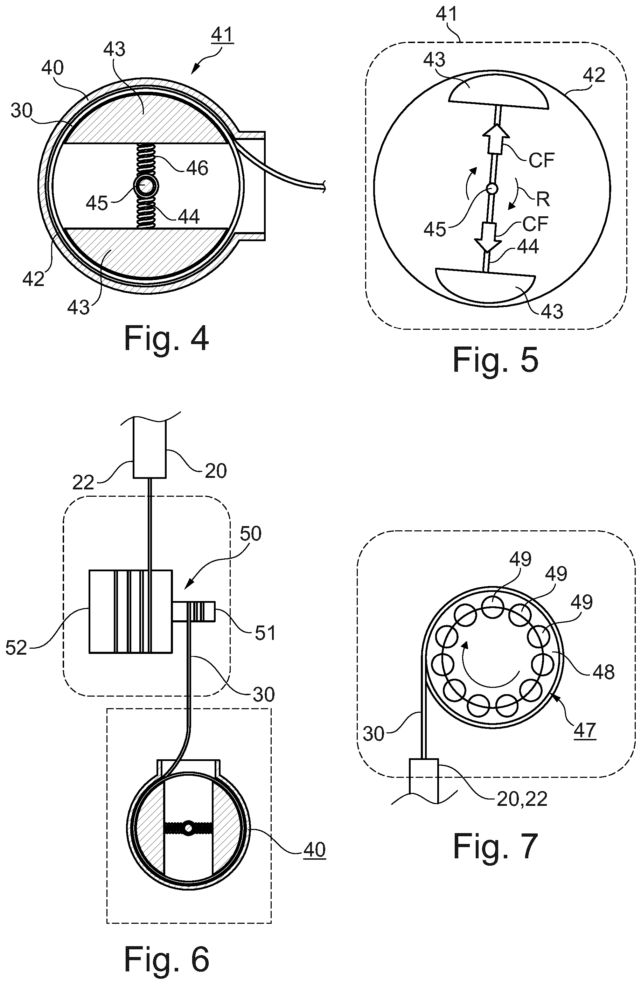

Figure 3 shows a cross-sectional view of the collapsible steering column 1 in the normal operating position. As can be seen also from Figures 1 and 2, the collapsible steering column 1 comprises a brake device 40 and further a wire 30. The wire 30 is attached to a second end 22 of the second steering column 20 located opposite of a first end 21 of the second steering column 20, where the steering device 2 is or can be attached. For this purpose, the wire 30 is guided through an aperture 12 inside or of the first column segment 10 leading from the exterior or outer side of the first column segment 10 towards its inside or space, where the second column segment 20 is located with its second end 22. Further, the wire 30 is spooled and attached inside the brake device 40, which comprises a braking mechanism 41, 47 (see Figures 4, 5 and 7). The wire 30 is coupled to the braking mechanism 41, 47.

Figures 4 to 6 show an exemplary friction braking mechanism 41, which comprises a drum 42 and two brake pads 43 located opposite of one another. The wire 30 is at least partially along its extension or length spooled around the brake pads 43 and located in between the drum 42 and the brake pads 43. The brake pads 43 are arranged on common axis 44 in this example, which is rotatable relative to the drum 42. The brake pads 43 are movable along the axis 44 towards the drum 42. For example, as shown in Fig. 4, there may be springs 46 attaching each of the braked pads 43 along the axis 44 or forming the axis 44 to an attachment point 45 or center point. When the wire 30 is unspooled, it triggers the braking of the brake device 40 by rotating the axis 44 in the direction of rotation R shown in Fig. 5. This generates a centrifugal force CF and causes the brake pads 43 to move towards the drum 42, generating a friction force clamping the wire 30 in between the brake pads 43 and the drum 42. By the design of the brake pads 43, drum 42 and wire 30, it can be configured at which speed or load applied onto the second steering column 20 causing the collapsing or riding down of the second steering column 20 towards the cockpit or first steering column 10, the braking mechanism 41 is triggered and thereby restrains the wire 30 by clamping it in between the brake pads 43 and the drum 42. The clamped and thereby tightened wire 30 cannot unspool anymore and give way to the second steering column 20 to collapse any further, thereby restraining any further collapsing of the second column segment 20.

This is the end point of the collapsible steering column 1 that is provided by the design of the braking mechanism 41 or brake device 40 with the wire 30. This end point could be different for different vehicles or markets, where different safety provisions or regulations can apply. For example, for markets with seat belt enforcement or without seat belt enforcement, it may be desirable to have different end points because the vehicle manufacturer cannot rely on passengers or occupants to use the seat belt in markets without enforcement or law prescribing this. Hence, for example, the vehicle manufacturer may want to stop the collapse of the second column segment 20 earlier or later depending on the required safety level considering the enforced safety measures or generally the safety measures which the vehicle may have or how these are designed, such as size or inflation time of the airbag. With the proposed collapsible steering column 1, the energy absorption provided by the collapsible steering column 1 is not only controlled and variable depending on the force applied onto the steering column 1. But the end point can also be easily defined by minor changes in dimensioning of the brake 40.

In Figures 1 to 3, the brake device 40 is exemplary shown located or attached at the first column segment 10. However, the brake device 40 could alternatively be attached at another fixed position relative to the moving second steering column 20. For example, the brake device 40 can alternatively be fixed at the cockpit, specifically near an attachment of the first steering column 10 to the cockpit.

For enabling the collapsing from a fixed position of the respective column segments 10, 20 at each other, a release arrangement 60 may be provided, which is not shown here but whose position is indicated exemplary in Figure 3. For example, there may be an intended mechanical or structural weakness in the fixed position or attachment thereof of the column segments 10, 20 at each other, which may serve as the release arrangement 60. Once the intended weakness breaks when the passenger or occupant collides with the steering device airbag or second steering column 20, the release arrangement 60 can break or similar and thereby release the second column segment 20 for collapsing towards the first column segment 10 in the crash event.

The brake device 40 in Figures 4 to 6 may also comprise a spring-loaded retraction mechanism 44 by virtue of the springs 46, which can be loaded away from the drum 42 and towards the attachment point 45 for retracting the wire 30 in case no centrifugal force CF is applied or the centrifugal force CF is below the force with which the springs 46 are loaded.

In Figure 6, the steering column 1 is exemplary shown with a spool gear 50 with two spools 51, 52 of different diameter onto which the wire 30 is spooled between its attachment to the brake device 40 or braking mechanism 41 and to the second end 22 of the second column segment 20. The smaller diameter spool 51 is located or arranged at the braking mechanism 41. Specifically, the wire 30 is connected from the braking mechanism 41 to the smaller diameter spool 51, which is located or arranged at the larger diameter spool 52. The wire 30 is spooled from the smaller diameter spool 51 around the larger diameter spool 52, from where it is connected to the second column segment 20. Thereby, the rotational speed of the unspooling of the wire 30 at the braking mechanism 41, e.g. at the one or more brake pads 43, can be increased. Thereby, even when the second steering column segment 20 moves relatively slow, sufficient rotational speed for the braking mechanism 41 to trigger can be provided by the unspooling of the wire 30 via the spool gear 50.

Figure 7 shows an alternative braking mechanism 47 for the brake device 40, which is in the form of a magnetic braking mechanism 47. In the example of Figure 7, the magnetic braking mechanism 47 comprises several conductive rotary components 48 and a stationary magnets 49 opposite of the conductive rotary components 48. The conductive rotary components 48 are attached to the wire 30 such that the unspooling of the wire 30 triggers the braking of the brake device 40 by rotating the conductive rotary components 48, thereby inducing eddy currents therein and generating opposing magnetic fields inside the brake device 40, which are restraining the wire 30 from unspooling and thereby the second steering column 20 from collapsing any further. The eddy currents induced in the conductive rotary components 48 are opposed to the magnetic field of the stationary magnet 49 opposite thereof, thereby restraining any further movement of the wire 30. Specifically, the wire 30 may be spooled or wound around the conductive rotary components 48.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: steering column
- 10: first column segment
- 11: attachment section
- 12: aperture
- 20: second column segment
- 21: first end
- 22: second end
- 30: wire
- 40: brake device
- 41: friction braking mechanism
- 42: drum
- 43: brake pad
- 44: axis
- 45: attachment point
- 46: spring
- 47: magnetic braking mechanism
- 48: conductive rotary component
- 49: stationary magnet
- 50: spool gear
- 51: smaller diameter spool
- 52: larger diameter spool
- 60: release arrangement
- R: rotation
- CF: centrifugal force

## Claims

1. A steering column (1) for a vehicle, the steering column (1) comprising:
a first column segment (10) for attachment to the vehicle;
a second column segment (20) for attaching a steering device (2) thereto, wherein the second column segment (20) is movable in relation to the first column segment (10) and collapsible towards the first column segment (10) in a crash event;
a wire (30) attached to the second column segment (20); and
a brake device (40), wherein the brake device (40) comprises a braking mechanism (41, 47), wherein the wire (30) is spooled inside the brake device (40) and coupled to the braking mechanism (41, 47), and wherein the braking mechanism (41, 47) is configured to brake when the wire (30) is unspooled by the collapsing of the second column segment (20) in the crash event, thereby restraining the wire (30) from unspooling and restraining the collapsing of the second column segment (20).

2. The steering column (1) of claim 1, wherein the braking mechanism (41, 47) comprises a friction braking mechanism (41).

3. The steering column (1) of claim 2, wherein the friction braking mechanism (41) comprises a drum (42) and at least one brake pad (43), wherein the wire (30) is at least partially spooled in between the drum (42) and the at least one brake pad (43).

4. The steering column (1) of claim 3, wherein the at least one brake pad (43) is arranged on one or more axes (44) rotatable relative to the drum (42), and wherein the at least one brake pad (43) is movable along the one or more axes (44) towards the drum (42) such that the unspooling of the wire (30) triggers the braking of the brake device (40) by rotating the one or more axes (44) and moving the at least one brake pad (43) towards the drum (43), generating friction and thereby clamping the wire (30) in between the at least one brake pad (43) and the drum (42).

5. The steering column (1) of any one of the previous claims, wherein the braking mechanism (41, 47) comprises a magnetic braking mechanism (47).

6. The steering column (1) of claim 5, wherein the magnetic braking mechanism (47) comprises one or more conductive rotary components (48) and one or more stationary magnets (49) opposite of the one or more conductive rotary components (48), and wherein the one or more conductive rotary components (48) are attached to the wire (30) such that the unspooling of the wire (30) triggers the braking of the brake device (40) by rotating the one or more conductive rotary components (48), thereby inducing eddy currents therein and generating opposing magnetic fields inside the brake device (40), which are restraining the wire (30) from unspooling.

7. The steering column (1) of any one of the previous claims, wherein the wire (30) is guided through an aperture (12) inside the first column segment (10).

8. The steering column (1) of any one of the previous claims, wherein the wire (30) is attached to a second end (22) of the second column segment (20) opposite of a first end (21) for attaching the steering device (2) thereto.

9. The steering column (1) of any one of the previous claims, wherein the second column segment (20) is slidable within the first column segment (10).

10. The steering column (1) of any one of the previous claims, wherein the brake device (40) comprises a spring-loaded retraction mechanism for retracting the wire (30).

11. The steering column (1) of any one of the previous claims, wherein the brake device (40) is attached to the first column segment (10), or wherein the brake device (40) is attached away from the first column segment (10) and the second column segment (20), in particular to a cockpit of the vehicle.

12. The steering column (1) of any one of the previous claims, wherein the steering column (1) comprises a release arrangement (60) in between the first column segment (10) and the second column segment (20), wherein the release arrangement (60) is configured to release the second column segment (20) for collapsing towards the first column segment (10) in the crash event.

13. The steering column (1) of any one of the previous claims, wherein the steering column (1) comprises a spool gear (50) with two spools (51, 52) of different diameter onto which the wire (30) is spooled between its attachment to the braking mechanism (41, 47) and to the second column segment (20).

14. A vehicle comprising the steering column (1) according to any one of previous claims and the steering device (2) attached to the second column segment (20).

15. Use of the steering column (1) according to any one of claims 1 to 13 in a vehicle.
